# EUROPEAN PATENT APPLICATION

(11) **EP 4 542 086 A1**
(43) Date of publication of application: **23.04.2025**
(21) Application number: 23859263.8
(22) Date of filing: 25.08.2023
(51) Int. Cl.: F16H 57/027

(54) **OIL LEAKAGE- AND WATER INFLOW-PREVENTING TRANSMISSION DEVICE**

(30) Priority: 29.08.2022 CN 202211042713
(71) Applicant: XPT EDS (Hefei) Co., Ltd., Hefei, Anhui 230601 (CN)
(72) Inventor: WANG, Yanbin, Shanghai 201804 (CN); WANG, Sihao, Shanghai 201804 (CN); SHI, Yangpeng, Shanghai 201804 (CN)
(74) Representative: Vossius & Partner Patentanwälte Rechtsanwälte mbB
(86) International application number: PCT/CN2023/114984
(87) International publication number: WO 2024/046231

(57) **Abstract**

The invention relates to the field of transmission devices, and particularly provides a transmission device capable of preventing oil leakage and water ingress, aiming at solving the problems that an existing transmission device cannot well implement oil leakage prevention and high waterproofness. To this end, the transmission device according to the invention comprises: a baffle and a vent valve. The baffle is connected to an inner wall of a housing of the transmission device and forms a vent chamber with the inner wall of the housing, the baffle is provided with a communication hole, and the communication hole and the vent hole are both in communication with the vent chamber. The vent valve is hermetically inserted into the vent hole, the vent valve has one end in communication with the outside and the other end in communication with the vent chamber, and a waterproof and oil-blocking filter element is arranged in the vent valve. The vent valve can prevent water from entering the housing. The mounting of the baffle reduces the amount of oil splashed into the vent chamber, and then the oil does not leak through filtering by the vent valve. Moreover, after the filter element absorbs a certain amount of oil, the oil flows back to the interior of the housing, thereby further preventing the leakage of the oil.

## Description

### Technical Field

The invention relates to the field of transmission devices, and in particular, to a transmission device capable of preventing oil leakage and water ingress.

### Background Art

With the continuous popularization of new energy vehicles, a high-speed motor has become a main development direction of an electric drive system for battery electric vehicles, but the high-speed motor puts forward higher requirements for a transmission and a transmission device of the electric drive system. When a transmission is operating, an internal pressure is generally greater than an external pressure. In order to balance the internal pressure with the external pressure, it is necessary to achieve air pressure balance by internal-external communication, but at the same time, it is necessary to prevent internal oil from emerging at a high rotation speed and prevent external water from invading the interior of a system to result in emulsification of the internal oil and failure of mechanical parts.

Currently, in the high-speed transmission or electric drive system, a combination of a lengthened rubber tube and an ordinary normally-open vent plug is often used to avoid the invasion of the external water and the leakage of the internal oil, but this solution has some disadvantages: for example, low level of waterproof and oil leakage prevention: the normally-open vent plug can only meet air permeability of an ordinary chamber, and as waterproof level requirements and wading depth requirements for electric vehicles are increased, this solution cannot completely prevent the external water from entering the chamber, and the aging and cracking of rubber may lead to oil leakage; high part failure rate: the rubber tube is prone to aging and cracking in an environment with long-term high temperature or high humidity, etc.; after long-term use in a vehicle, the normally-open vent plug is prone to reduction of the air permeability due to being covered by dust and soil; and complicated structure: the open vent plug and the rubber tube both need to be fixed via fixing buckles, etc., resulting in that a vehicle sheet metal part or a vehicle body part needs to be provided with openings as fixing points, thereby making the structure relatively complicated and increasing production costs.

Accordingly, there is a need in the art for a novel transmission device to solve the foregoing problems.

### Summary

The invention aims to solve the foregoing technical problems, that is, to solve the problems that an existing transmission device cannot well implement oil leakage prevention and high waterproofness. For this purpose, the invention provides a transmission device capable of preventing oil leakage and water ingress. The transmission device comprises a housing provided with a vent hole, and further comprises:
a baffle, wherein the baffle is connected to an inner wall of the housing and forms a vent chamber with the inner wall of the housing, the baffle is provided with a communication hole, and the communication hole and the vent hole are both in communication with the vent chamber; and
a vent valve, wherein the vent valve is hermetically inserted into the vent hole, the vent valve has one end in communication with the outside and the other end in communication with the vent chamber, and a waterproof and oil-blocking filter element is arranged in the vent valve.

In a specific implementation of the transmission device capable of preventing oil leakage and water ingress described above, a communication pipe is provided on the baffle, the communication hole is formed in the communication pipe, and the communication pipe protrudes toward an inner side of the housing.

In a specific implementation of the transmission device capable of preventing oil leakage and water ingress described above, the transmission device further comprises an oil-retaining edge, wherein the oil-retaining edge is arranged at the bottom of the baffle, protrudes toward an outer side of the housing, and is configured to prevent oil in the transmission device from being directly splashed into the vent chamber.

In a specific implementation of the transmission device capable of preventing oil leakage and water ingress described above, the housing is provided with an oil discharge groove, the oil discharge groove is located at the bottom of the vent chamber when the baffle is connected to the inner wall of the housing, an oil return gap is formed between the oil-retaining edge and a bottom edge of the vent chamber, and the oil discharge groove is in communication with the oil return gap.

In a specific implementation of the transmission device capable of preventing oil leakage and water ingress described above, the transmission device further comprises an anti-dropping sealing structure, wherein the vent valve is inserted into the vent hole by means of the anti-dropping sealing structure.

In a specific implementation of the transmission device capable of preventing oil leakage and water ingress described above, the anti-dropping sealing structure comprises: a boss, wherein the boss is arranged on the vent valve; and a groove, wherein the groove is provided in an inner wall of the vent hole, and the boss is received in the groove.

In a specific implementation of the transmission device capable of preventing oil leakage and water ingress described above, the top of the vent valve is provided with a dust cover.

In a specific implementation of the transmission device capable of preventing oil leakage and water ingress described above, the transmission device further comprises a baffle fastening structure, wherein the baffle is connected to the inner wall of the housing via the baffle fastening structure.

In a specific implementation of the transmission device capable of preventing oil leakage and water ingress described above, the baffle fastening structure comprises:
a first fastening portion, wherein the first fastening portion is arranged on the baffle;
a second fastening portion, wherein the second fastening portion is arranged on the inner wall of the housing, and is located in the vent chamber; and
a fastener, wherein the first fastening portion is connected to the second fastening portion via the fastener.

In a specific implementation of the transmission device capable of preventing oil leakage and water ingress described above, the vent valve is further provided with a multi-protrusion sealing structure, and when the vent valve is inserted into the vent hole, the multi-protrusion sealing structure is engaged with the inner wall of the vent hole so as to block an assembly gap between the vent valve and the inner wall of the vent hole.

According to the invention, a design idea of an original vent device is changed, and a method of combining the baffle with the vent valve is selected; the communication hole has an area much less than that of the baffle, so that the amount of oil entering the vent chamber can be reduced; and the waterproof and oil-blocking filter element is arranged in the vent valve, can prevent water from entering the housing from the outside while allowing ventilation, and can further filter and absorb the oil. The entire solution can achieve good effects of preventing water ingress and oil leakage. In addition, the vent valve is easy to mount and use, which facilitates mass production, reduces manufacturing processes of the vehicle, and avoids provision of openings in a vehicle sheet metal part or a vehicle body part as fixing points, thereby reducing production costs. The structure is compact, and the overall design of a vehicle body is facilitated. The baffle is mounted in the housing, has a simple structure, and does not occupy the space of the vehicle, thereby further optimizing the layout of the vehicle.

### Brief Description of the Drawings

Preferred implementations of the invention are described below with reference to the accompanying drawings, in which:
FIG. 1 is a schematic diagram of a partial structure of a transmission device according to the invention, showing an oil leakage-preventing and water ingress-preventing structure according to the invention;
FIG. 2 is a schematic structural diagram of a housing of a transmission device according to the invention;
FIG. 3 is an enlarged view of a part A of FIG. 2, showing a position of an oil discharge groove;
FIG. 4 is a structural diagram of one side of a baffle of a transmission device according to the invention;
FIG. 5 is a structural diagram of the other side of a baffle of a transmission device according to the invention, showing a structure of an oil-retaining edge;
FIG. 6 is a schematic structural diagram of a vent valve of a transmission device according to the invention; and
FIG. 7 is an overall cross-sectional view of an oil leakage-preventing and water ingress-preventing structure of a transmission device according to the invention after being mounted, showing a position of an oil return gap.

In the figures: 1. Housing, 101. Vent hole, 2. Baffle, 201. Communication hole, 202. Communication pipe, 3. Vent valve, 4. Oil-retaining edge, 401. Oil return gap, 5. Oil discharge groove, 6. Anti-dropping sealing structure, 601. Boss, 602. Groove, 7. Dust cover, 8. Baffle fastening structure, 801. First fastening portion, 802. Second fastening portion, 803. Fastener, 9. Multi-protrusion sealing structure, 10. Vent chamber.

### Detailed Description of Embodiments

Preferred implementations of the invention are described below with reference to the accompanying drawings and in conjunction with a transmission. It should be understood by those skilled in the art that these implementations are only for explaining the technical principle of the invention, and are not intended to limit the scope of protection of the invention. Those skilled in the art can make adjustments to the implementations according to requirements, so as to adapt to specific application scenarios. For example, although this description is described in conjunction with the transmission, this is not restrictive, and those skilled in the art can apply the invention to any other transmission device as required, provided that the transmission device needs to balance an internal air pressure and an external air pressure and further needs to prevent an internal lubricating fluid from leaking out. For another example, although a connection between a baffle and a transmission housing is described in conjunction with a fastener in this description, it is obvious that the invention can use other fastening methods, such as snap-fitting or integral casting, provided that the method enables the baffle to be attached to an inner wall of the housing.

It should be noted that, in the description of the invention, the terms that indicate the direction or positional relationship, such as "upper", "lower", "left", "right", "inner", and "outer", are based on the direction or positional relationship shown in the accompanying drawings, which is merely for ease of description instead of indicating or implying that the related device or element must have a particular orientation and be constructed and operated in a particular orientation, and therefore, should not be construed as limiting the invention. Moreover, the ordinal numbers such as "first" and "second" are merely used for the illustrative purpose, and should not be construed as indicating or implying relative importance.

In addition, it should also be noted that, in the description of the invention, the terms "mount" and "connect" should be interpreted in a broad sense unless explicitly defined and limited otherwise. For example, the terms may mean a fixed connection, a detachable connection or an integral connection; may be a mechanical connection or an electrical connection; and may be a direct connection, or an indirect connection by means of an intermediate medium. For those skilled in the art, the specific meanings of the foregoing terms in the invention can be interpreted according to a specific situation.

Furthermore, in order to show the core technical solution of the invention more clearly, the description of known structures of the transmission is omitted in the following description, but this omission is only for ease of description, and does not mean that the transmission can lack these structures.

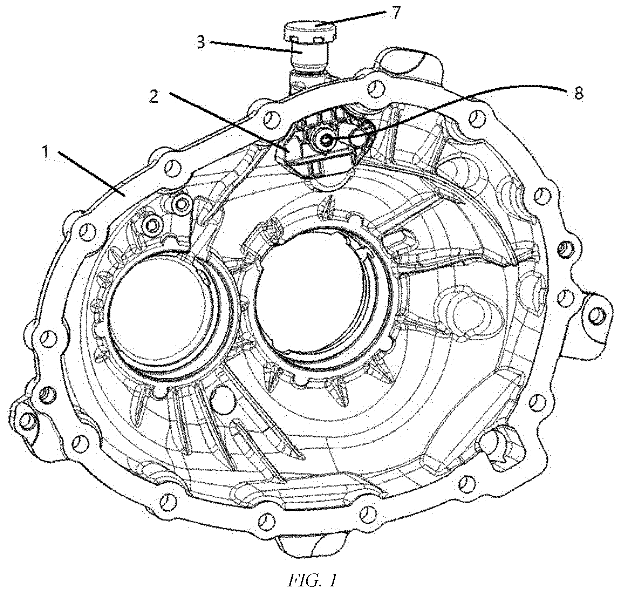

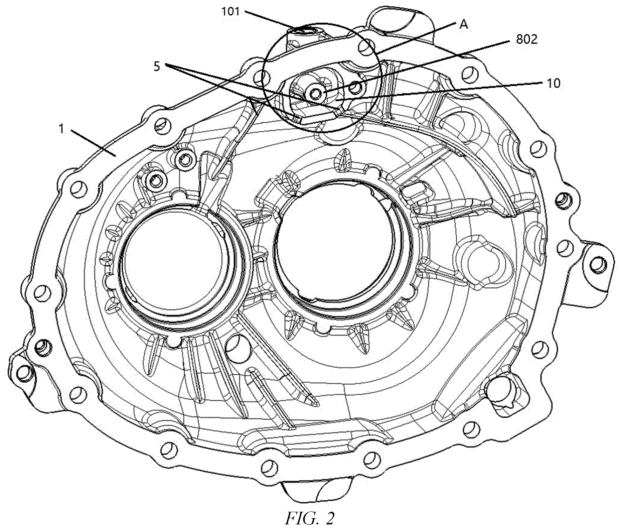

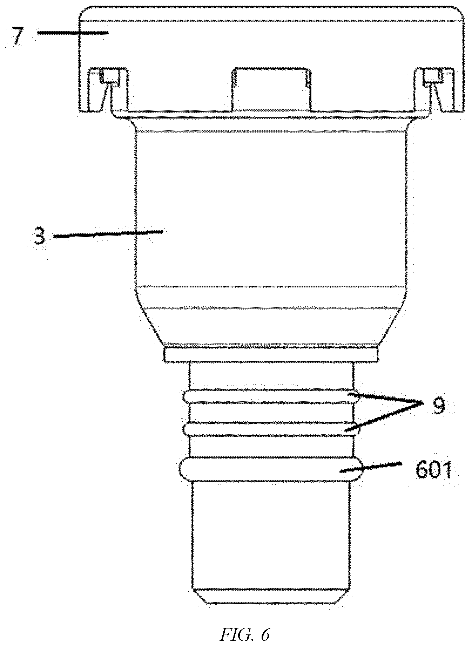

As shown in FIGS. 1 to 7, the invention provides a transmission capable of preventing oil leakage and water ingress. The transmission comprises a housing 1 provided with a vent hole 101. In addition, the transmission further comprises: a baffle 2 and a vent valve 3. The baffle 2 is connected to an inner wall of the housing 1 and forms a vent chamber 10 with the inner wall of the housing 1, the baffle 2 is provided with a communication hole 201, and the communication hole 201 and the vent hole 101 are both in communication with the vent chamber 10. The vent valve 3 is hermetically inserted into the vent hole 101, the vent valve 3 has one end in communication with the outside and the other end in communication with the vent chamber 10, and a waterproof and oil-blocking filter element is arranged in the vent valve 3.

In order to achieve the combination of oil leakage prevention and high waterproofness, the baffle 2 and the vent valve 3 are provided in this embodiment. The baffle 2 is connected to the inner wall of the housing 1 and forms the vent chamber 10 with the inner wall of the housing 1, and the baffle 2 is provided with the communication hole 201. The interiors of the vent hole 101, the vent chamber 10, the communication hole 201 and the housing 1 are in communication with one another in sequence, thereby enabling the interior of the transmission to be in communication with the outside. The communication hole 201 has an area less than that of the baffle 2, so that the amount of oil entering the vent chamber 10 can be reduced. The vent valve 3 is hermetically inserted into the vent hole 101, the vent valve 3 has one end in communication with the outside and the other end in communication with the vent chamber 10, and a waterproof and oil-blocking filter element is arranged in the vent valve 3, so that it is possible to prevent water from entering the housing 1 from the outside while allowing ventilation, and also to filter and absorb the oil, thereby preventing the oil in the housing 1 from leaking out. Moreover, after the filter element absorbs a certain amount of oil, the oil flows back to the interior of the housing 1, thereby further preventing the reduction of oil. The filter element may be a combination of an oil-blocking filter element and a waterproof and breathable membrane. The oil-blocking filter element is arranged on the side close to the vent chamber 10, and the waterproof and breathable membrane is arranged on the side of the oil-blocking filter element close to the outside air. The oil-blocking filter element may be made of felt, a fiber, a non-woven fabric, etc., provided that oil can be prevented from coming into contact with the waterproof and breathable membrane. The waterproof and breathable membrane may be made of a non-woven fabric or e-PTFE, provided that the waterproof and breathable membrane can achieve two-way ventilation and is waterproof and dustproof. A valve body of the vent valve 3 is also made of a plastic or metal material, and is mainly configured to bear an internal structure.

The provision of the vent chamber 10 reduces the burden of filtering oil by the vent valve 3. After the oil is splashed into the vent chamber 10 through the communication hole 201, not all the oil flows into the vent valve 3, but a part thereof may be temporarily retained in the vent chamber 10, which can not only reduce the possibility of oil leakage, but also prevent the oil from all directly entering the vent valve 3 for filtering to cause accelerated damage of the vent valve 3.

According to this solution, changes are made on a design idea of an original vent device, and a method of combining the baffle 2 with the vent valve 3 is selected, which can well achieve good effects of preventing water ingress and oil leakage. Moreover, the vent valve 3 is easy to mount and use, which facilitates mass production, reduces manufacturing processes of the vehicle, and avoids the need for providing openings in a vehicle sheet metal part or a vehicle body part as fixing points, thereby reducing production costs. The structure is compact, and the overall design of a vehicle body is facilitated. The baffle 2 is mounted in the housing 1, has a simple structure, and does not occupy the space of the vehicle, thereby further optimizing the layout of the vehicle.

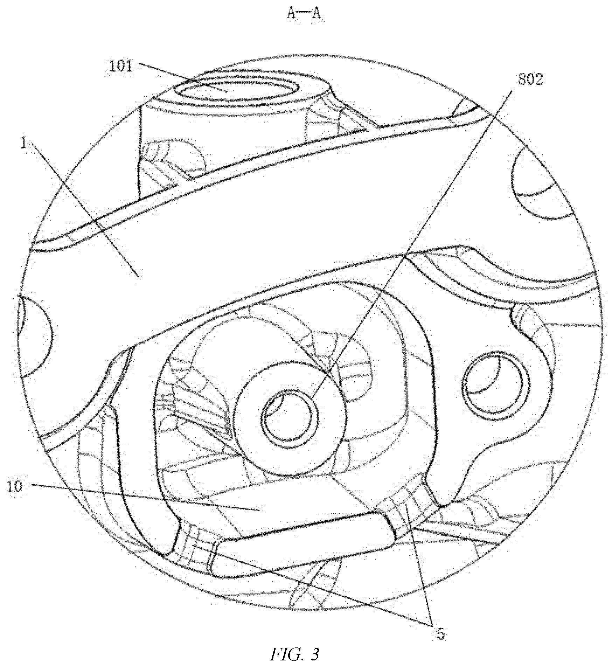

Further, as shown in FIG. 3, a communication pipe 202 is provided on the baffle 2, the communication hole 201 is formed in the communication pipe 202, and the communication pipe 202 protrudes toward an inner side of the housing 1.

In this embodiment, to further reduce the amount of oil splashed into the communication hole 201, a communication pipe 202 is provided on the baffle 2, the communication hole 201 is formed in the communication pipe 202, and the communication pipe 202 protrudes toward an inner side of the housing 1. After falling on an outer wall of the communication pipe 202, a part of the splashed oil will drip down, thereby reducing the amount of oil entering the communication pipe 202.

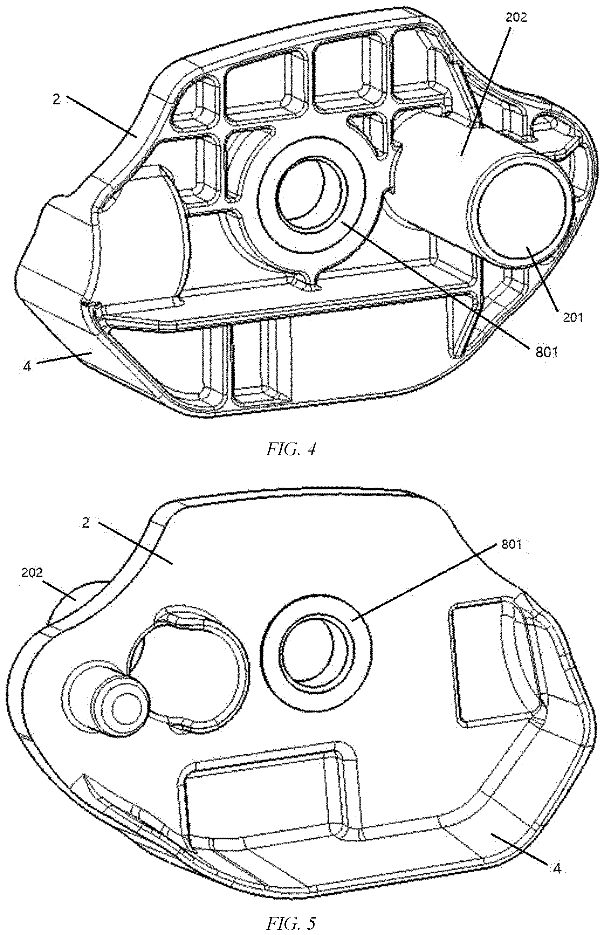

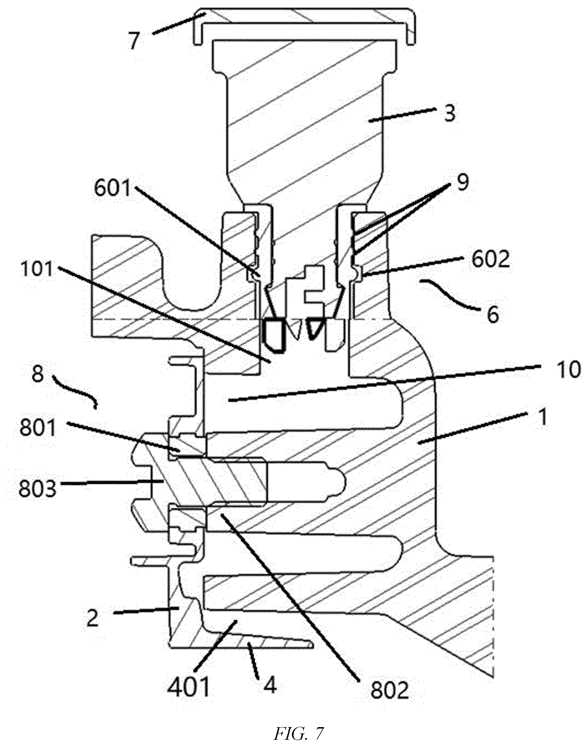

Further, as shown in FIGS. 4 and 7, the transmission according to the invention further comprises an oil-retaining edge 4. The oil-retaining edge 4 is arranged at the bottom of the baffle 2, protrudes towards an outer side of the housing 1, and is configured to prevent oil in the transmission from being directly splashed into the vent chamber 10.

In this embodiment, after the baffle 2 is connected to the inner wall of the housing 1, there may be a gap therebetween, and oil may enter the vent chamber 10 along the gap. Therefore, the oil-retaining edge 4 is arranged at the bottom of the baffle 2, and the oil-retaining edge 4 protrudes from a bottom edge of the baffle 2 toward the outer side of the housing 1 (the right side in FIG. 7), thereby blocking the gap between the baffle and the inner wall of the housing and preventing the oil from being splashed into the vent chamber.

Further, the housing 1 is provided with an oil discharge groove 5, the oil discharge groove 5 is located at the bottom of the vent chamber 10 when the baffle 2 is connected to the inner wall of the housing 1, an oil return gap 401 is formed between the oil-retaining edge 4 and a bottom edge of the vent chamber 10, and the oil discharge groove 5 is in communication with the oil return gap 401.

Specifically, in this embodiment, each of the oil splashed into the vent chamber 10 and the oil that needs to flow back after the waterproof and oil-blocking filter element absorbs a certain amount of oil needs to be discharged through an outlet, and the oil also needs to be prevented from being splashed into the vent chamber 10 again while being discharged. Therefore, the housing 1 is provided with the oil discharge groove 5. When the baffle 2 is connected to the inner wall of the housing 1, the oil discharge groove 5 is located at the bottom of the vent chamber 10. In addition, the oil return gap 401 is formed between the oil-retaining edge 4 and the edge of the vent chamber 10, so that the oil in the vent chamber 10 flows out along the oil discharge groove 5, passes through the oil return gap 401, and finally flows back into the housing 1, and thus the requirements for oil outflow can be met without affecting the oil retaining function of the oil-retaining edge 4.

Further, the transmission according to the invention further comprises an anti-dropping sealing structure 6. The vent valve 3 is inserted into the vent hole 101 by means of the anti-dropping sealing structure 6.

In this embodiment, to prevent the vent valve 3 from dropping in a vibration environment, the anti-dropping sealing structure 6 is provided, and the vent valve 3 is inserted into the vent hole 101 by means of the anti-dropping sealing structure 6. The anti-dropping sealing structure 6 may be in any form, such as snap-fitting and threaded connection, provided that the purpose of preventing the vent valve 3 from being separated from the housing 1 can be achieved.

Further, the anti-dropping sealing structure 6 comprises: a boss 601 and a groove 602. The boss 601 is arranged on the vent valve 3. The groove 602 is provided in an inner wall of the vent hole 101, and the boss 601 is received in the groove 602.

In this embodiment, the structure of the anti-dropping sealing structure 6 is further defined. In order to facilitate production and use, the structure of the anti-dropping sealing structure 6 can be as simple and practical as possible under the condition that anti-dropping can be achieved. Therefore, in this solution, the boss 601 and the groove 602 are arranged, and the boss 601 is arranged on the vent valve 3 while the groove 602 is provided in the inner wall of the vent hole 101. When in use, the boss 601 is received in the groove 602, so that the vent valve 3 is prevented from dropping from the vent hole 101 due to external vibration.

Further, the top of the vent valve 3 is provided with a dust cover 7.

In this embodiment, in order to prevent external dust and soil from covering the vent valve 3 to cause a decrease in the air permeability or to prevent foreign matter from entering and damaging the internal structure of the vent valve 3 after long-term use, the dust cover 7 is arranged at the top of the vent valve 3. The dust cover 7 may be made of a plastic or metal material, and there is a very large gap between the dust cover 7 and the vent valve 3, so that the vent valve 3 can be in communication with the outside normally.

Further, the transmission according to the invention further comprises a baffle fastening structure 8. The baffle 2 is connected to the inner wall of the housing 1 via the baffle fastening structure 8.

In this embodiment, the baffle 2 is connected to the inner wall of the housing 1 via the baffle fastening structure 8. The baffle fastening structure 8 may be in any form, such as snap-fitting, bolted connection or even welding, provided that the baffle 2 can be connected to the housing 1.

Further, the baffle fastening structure 8 comprises: a first fastening portion 801, a second fastening portion 802, and a fastener 803. The first fastening portion 801 is arranged on the baffle 2. The second fastening portion 802 is arranged on the inner wall of the housing 1, and is located in the vent chamber 10. The first fastening portion 801 is connected to the second fastening portion 802 via the fastener 803.

In this embodiment, the baffle fastening structure 8 is further defined. Since the baffle 2 is mounted in the housing 1, the baffle fastening structure 8 should not occupy a too large space, and cannot affect functions of various components. Considering the need for convenience in mounting, the baffle fastening structure 8 is divided into three parts. The first fastening portion 801 is arranged on the baffle 2, and the second fastening portion 802 is arranged on the inner wall of the housing 1, and is located in the vent chamber 10. The first fastening portion 801 is connected to the second fastening portion 802 via the fastener 803, and the fastener 803 may be a bolt. This solution provides a simple structure and is easy to implement.

Further, the vent valve 3 is further provided with a multi-protrusion sealing structure 9, and when the vent valve 3 is inserted into the vent hole 101, the multi-protrusion sealing structure 9 is engaged with the inner wall of the vent hole 101 so as to block an assembly gap between the vent valve 3 and the inner wall of the vent hole 101.

In this embodiment, when the vent valve 3 is mounted on the housing 1, a gap is formed in an assembly joint between the vent valve and the vent hole 101. In order to prevent oil leakage from this gap, the vent valve 3 is provided with the multi-protrusion sealing structure 9, and when the vent valve 3 is inserted into the vent hole 101, the multi-protrusion sealing structure 9 is engaged with the inner wall of the vent hole 101 so as to block the gap between the vent valve 3 and the inner wall of the vent hole 101 to prevent oil leakage.

It should be noted that although two annular protrusions are shown in FIG. 7, this is not a limitation on the invention. Those skilled in the art may use two or more annular protrusions, or even other structures except the annular protrusions without deviating from the basic principle of the invention, provided that the fit gap can be blocked to prevent oil leakage. For example, an inversely splayed sealing ring and the like may be used. All these do not deviate from the principle of the invention, and thus shall fall within the scope of protection of the invention.

Heretofore, the technical solutions of the invention have been described with reference to the preferred implementations shown in the accompanying drawings. However, those skilled in the art can readily understand that the scope of protection of the invention is apparently not limited to these specific implementations. Those skilled in the art may make equivalent changes or substitutions to the related technical features without departing from the principle of the invention, and all the technical solutions with such changes or substitutions shall fall within the scope of protection of the invention.

## Claims

1. A transmission device capable of preventing oil leakage and water ingress, which comprises a housing (1) provided with a vent hole (101), the transmission device further comprising:
a baffle (2), wherein the baffle (2) is connected to an inner wall of the housing (1) and forms a vent chamber (10) with the inner wall of the housing (1), the baffle (2) is provided with a communication hole (201), and the communication hole (201) and the vent hole (101) are both in communication with the vent chamber (10); and
a vent valve (3), wherein the vent valve (3) is hermetically inserted into the vent hole (101), the vent valve (3) has one end in communication with the outside and the other end in communication with the vent chamber (10), and a waterproof and oil-blocking filter element is arranged in the vent valve (3).

2. The transmission device capable of preventing oil leakage and water ingress according to claim 1, wherein a communication pipe (202) is provided on the baffle (2), the communication hole (201) is formed in the communication pipe (202), and the communication pipe (202) protrudes toward an inner side of the housing (1).

3. The transmission device capable of preventing oil leakage and water ingress according to claim 1 or 2, further comprising an oil-retaining edge (4), wherein the oil-retaining edge (4) is arranged at the bottom of the baffle (2), protrudes toward an outer side of the housing (1), and is configured to prevent oil in the transmission device from being directly splashed into the vent chamber (10).

4. The transmission device capable of preventing oil leakage and water ingress according to claim 3, wherein the housing (1) is provided with an oil discharge groove (5), the oil discharge groove (5) is located at the bottom of the vent chamber (10) when the baffle (2) is connected to the inner wall of the housing (1), an oil return gap (401) is formed between the oil-retaining edge (4) and a bottom edge of the vent chamber (10), and the oil discharge groove (5) is in communication with the oil return gap (401).

5. The transmission device capable of preventing oil leakage and water ingress according to claim 1, further comprising an anti-dropping sealing structure (6), wherein the vent valve (3) is inserted into the vent hole (101) by means of the anti-dropping sealing structure (6).

6. The transmission device capable of preventing oil leakage and water ingress according to claim 5, wherein the anti-dropping sealing structure (6) comprises:
a boss (601), wherein the boss (601) is arranged on the vent valve (3); and
a groove (602), wherein the groove (602) is provided in an inner wall of the vent hole (101), and the boss (601) is received in the groove (602).

7. The transmission device capable of preventing oil leakage and water ingress according to claim 1, wherein the top of the vent valve (3) is provided with a dust cover (7).

8. The transmission device capable of preventing oil leakage and water ingress according to claim 1, further comprising a baffle fastening structure (8), wherein the baffle (2) is connected to the inner wall of the housing (1) by the baffle fastening structure (8).

9. The transmission device capable of preventing oil leakage and water ingress according to claim 8, wherein the baffle fastening structure (8) comprises:
a first fastening portion (801), wherein the first fastening portion (801) is arranged on the baffle (2);
a second fastening portion (802), wherein the second fastening portion (802) is arranged on the inner wall of the housing (1), and is located in the vent chamber (10); and
a fastener (803), wherein the first fastening portion (801) is connected to the second fastening portion (802) via the fastener (803).

10. The transmission device capable of preventing oil leakage and water ingress according to claim 1, wherein the vent valve (3) is further provided with a multi-protrusion sealing structure (9), and when the vent valve (3) is inserted into the vent hole (101), the multi-protrusion sealing structure (9) is engaged with the inner wall of the vent hole (101) so as to block an assembly gap between the vent valve (3) and the inner wall of the vent hole (101).
